Europäisches Patentamt

European Patent Office

Office européen des brevets

(11) Publication number: 0 348 997 A2

# EUROPEAN PATENT APPLICATION

(21) Application number: 89111956.2

(51) Int. Cl.⁴: G06F 15/40

(22) Date of filing: 30.06.89

(30) Priority: 30.06.88 JP 160812/88

(43) Date of publication of application:
03.01.90 Bulletin 90/01

(84) Designated Contracting States:
DE FR GB

(71) Applicant: Kabushiki Kaisha Toshiba
72, Horikawa-cho Saiwai-ku
Kawasaki-shi(JP)

(72) Inventor: Yukawa, Atsushi c/o Intellectual
Property Division
KABUSHIKI KAISHA TOSHIBA 1-1 Shibaura
1-chome
Minato-ku Tokyo 105(JP)

(74) Representative: Lehn, Werner, Dipl.-Ing. et al
Hoffmann, Eitle & Partner Patentanwälte
Arabellastrasse 4
D-8000 München 81(DE)

(54) Two-dimensional file management system.

(57) A large-frame image (21) is divided into image pieces (23) each having a predetermined two-dimensional size, and the image pieces are divisionally stored in a plurality of optical disk devices (22-1 through 22-4) which can be parallelly accessed. Each disk stores division management information (an array position of each image piece on the large-frame image, and pointer information (optical disk number, and optical disk track number) indicating a storage position in the optical disk). A CPU (11) generates a storage destination information table in a main memory (15) in accordance with the division management information stored in each disk device. The storage destination information table represents a storage destination of each image piece in correspondence with its two-dimensional array position on the large-frame image. The CPU designates an access destination in units of disk devices, and simultaneously issues an access request to parallelly read out unit images.

FIG. 1

FIG. 2

## Two-dimensional file management system

The present invention relates to a file management system suitable for accessing data files of a large-frame image.

In recent years, a system using an optical disk device as an external storage device has been developed. Since the optical disk device can store a large volume of data, it is suitable for a system for dealing with large-frame image data such as a map. However, since the read/write speed of an optical disk device is not so high (e.g., 200 Kbytes/sec; seek time = 0.2 sec) in the present state, processing takes much time.

In general, a disk has a one-dimensional file structure. More specifically, files are managed in a tree structure format using directories and lists. A conventional system dealing with a large-frame image cannot display the entire large-frame image at a time due to the limited frame size of a display unit, and selectively extracts a portion of the entire image to display it on the screen. For this reason, a system of this type adopts a method of managing a large-frame image while dividing it. However, in the one-dimensional file management system described above, when a large-frame image is divided and stored in a single directory, a user must manage files while assigning their array information and division information to their file names. Therefore, when an image adjacent to a presently displayed partial image is to be displayed, all the file names registered in the directory must be searched using the file name of the target image data as a parameter to find a corresponding file name. Therefore, when a large-frame image is to be scrolled in real time, the above-mentioned file access method disturbs high-speed processing. In the file management method, when a large-frame image is divided, physical positional information of an adjacent divided image is not known. More specifically, in order to obtain physical positional information of an adjacent divided image, a file name of the adjacent divided image is detected by a certain method, e.g., on the basis of a correspondence between two-dimensionally divided images of the large-frame image and file names assigned to the divided images, and all the file names registered in the directory are sequentially searched using the detected file name as a parameter, thereby obtaining the physical positional information of the adjacent divided image. The above problem is also posed when a magnetic disk device is used.

It is an object of the present invention to provide a two-dimensional file management system for a large-frame image, which can read out a target image portion of a large-frame image from a disk device at high speed. In order to achieve the above object, according to the first aspect of the present invention, a two-dimensional file management system for a large-frame image, comprises: a plurality of disk devices which divisionally store unit images each having a predetermined size obtained by dividing a two-dimensional large-frame image in a matrix using an identical file name and can be parallelly accessed; storage destination information table generating means for generating a storage destination information table indicating storage destinations of the unit images constituting the large-frame image divisionally stored in the plurality of disk devices in correspondence with two-dimensional array positions of the unit images in the large-frame image; and disk access control means for designating an access destination in units of the disk devices with reference to the storage destination information table generated by the storage destination information table generating means, simultaneously supplying an access request to the disk devices which are designated as the access destinations, and parallelly reading out the unit images.

According to a second aspect of the present invention, unit images of a large-frame image are cyclically stored in a plurality of disk devices in their array order within each row or column. Every time a row or column is switched, the storage destination is cyclically switched by one disk device in a given direction. For example, assume that two-dimensionally divided unit images in a column direction are cyclically stored in four optical disk devices (#1, #2, #3, and #4) in the order of "#1, #2, #3, and #4". When a row is advanced by one, the unit images are stored from a column position advanced by one in the order of "#1, #2, #3, and #4". In this manner, a certain unit image and a unit image adjacent thereto are always stored in different disk devices, and hence, a plurality of disk devices can be accessed in parallel.

According to a third aspect of the present invention, division management information including pointer information indicating a storage position of each unit image stored in each disk device and array information indicating an array position in a large-frame image is stored in each disk device. When a file of a large-frame image is opened, a storage destination information table is generated in accordance with division management information stored in each disk device. As a result, in an external storage device which can change a disk like in an optical disk device, a correspondence between a disk and a disk device is not fixed, and if an arbitrary disk is loaded to an arbitrary disk device, a predetermined storage destination infor-

2

mation table can be generated.

According to the present invention, storage destinations of some unit images constituting a required image portion can be easily obtained from the storage destination information table, and some of a plurality of disk devices can be simultaneously accessed on the basis of the storage destination information. Therefore, a required image portion can be read out at high speed. When storage destinations of unit images are assigned as described above, since the storage destinations of some unit images constituting the required image portion are not concentrated on a specific disk device, the number of disk devices which can be simultaneously accessed can be increased, thus further improving access efficiency.

Other objects and features of the present invention will be apparent from the following description taken in connection with the following figures in which:

Fig. 1 is a schematic block diagram showing an embodiment of a system to which the present invention is applied;

Fig. 2 is a schematic diagram showing an embodiment of a file structure directly related to the present invention;

Fig. 3 is a view showing a storage destination information table;

Fig. 4 is a view for explaining an example of a read unit in initial image reading for a large-frame image 21 shown in Fig. 2; and

Figs. 5 and 6 are views for explaining read units in image reading upon frame scrolling for the large-frame image 21 shown in Fig. 2.

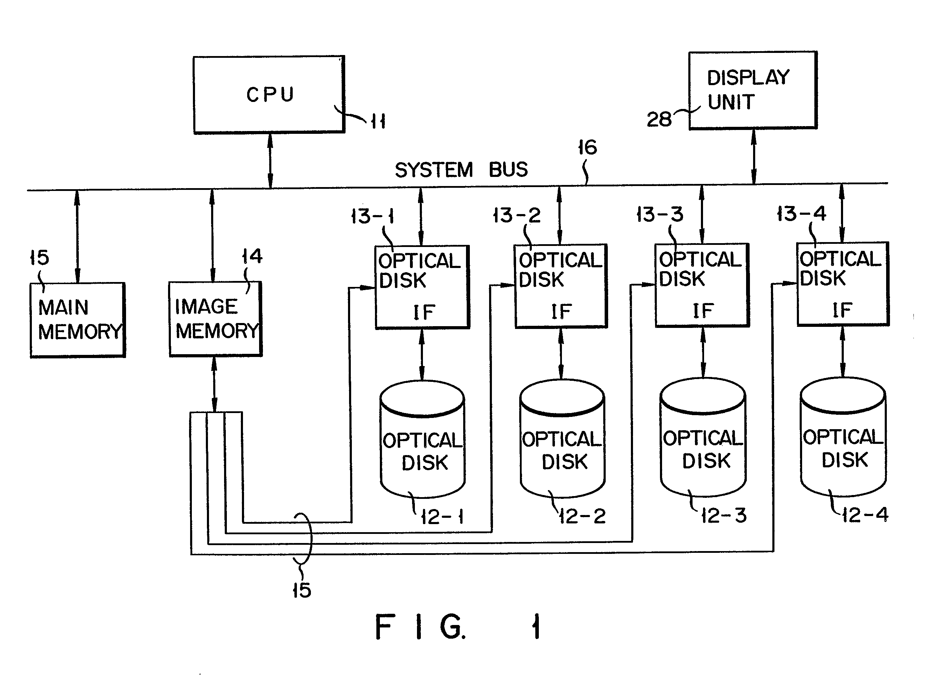

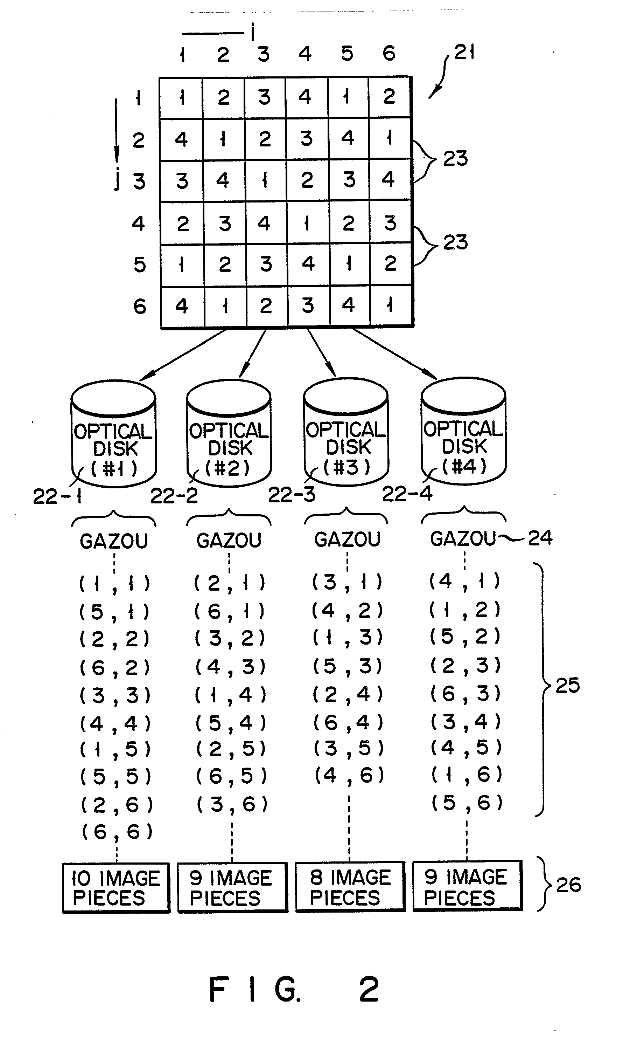

Fig. 1 is a block diagram showing an embodiment of a system to which the present invention is applied, and Fig. 2 is a schematic diagram showing an embodiment of a file structure directly related to the present invention.

In Fig. 1, a CPU 11 controls the entire system. Optical disk devices 12-1 through 12-4 divisionally store large-frame image data. Optical disk interfaces (optical disk IFs) 13-1 through 13-4 are arranged in correspondence with the optical disk devices 12-1 through 12-4, respectively, and parallelly (read/write) access the corresponding optical disk devices upon an instruction from the CPU 11. An image memory 14 stores a display image (display image data) to be displayed on a display unit (e.g., a CRT display) 28. The image memory 14 has a capacity of, e.g., 4,096 × 4,096 dots (vertical direction horizontal direction), and the frame size (resolution) of the display unit 28 is 1,024 × 1,280 dots (vertical direction × horizontal direction). More specifically, the capacity of the image memory 14 is set to be sufficiently larger than the frame size (resolution) of the display unit 28. Therefore, a display frame can be scrolled without performing image transfer from the optical disk devices 12-1 through 12-4 within a given range. A main memory 15 stores a storage information table 27 (to be described later). Note that in Fig. 1, the main memory 15 and the image memory 14 are separated for the purpose of illustrative convenience. However, in practice, a main memory area and an image memory area are allocated in a single memory. DMA (direct memory access) transfer paths 15 consist of four transfer path systems, and are used for DMA transfer between the optical disk IFs 13-1 through 13-4 and the image memory 14. Reference numeral 16 denotes a system bus for interconnecting the CPU 11, the optical disk IFs 13-1 through 13-4, the image memory 14, and the like. In Fig. 2, a two-dimensional large-frame image (large-frame image data) 21 whose position can be designated by two-dimensional coordinates (i,j) is divisionally stored in optical disks 22-1 through 22-4 having disk numbers 1 (#1) through 4 (#4). The size of the large-frame image is sufficiently larger than the frame size of the display unit 28. The large-frame image 21 is managed by in units of 1,024 × 1,024 (dots) unit images (to be referred to as image pieces) 23 obtained by dividing the image 21 in units of 1,024 dots in an i direction and in units of 1,024 dots in a direction, as shown in Fig. 2. In Fig. 2, a numerical value assigned to each image piece 23 indicates a disk number of an optical disk storing this piece. For example, an image piece 23 at an array position (coordinates) (i = 1, j = 1) in the large-frame image 21 (i.e., an image piece 23 in the first column and the first row) is stored in the optical disk 22-1 having the disk number #1, and an image piece 23 at an array position (i = 2, j = 1) in the large-frame image 21 (i.e., an image piece 23 in the second column and the first row) is stored in the optical disk 22-2 having the disk number #2. In this embodiment, the image pieces 23 in the large-frame image 21 are cyclically stored in the optical disks 22-1 through 22-4 in their array order within an identical row. Every time a row or column is switched, their storage destinations are cyclically switched by one disk in a given direction. For example, a storage destination of an image piece 23 in the third column and the first row is the optical disk 22-3 having the disk number #3. However, the storage destination of an image piece 23 in the third column and the second row is the optical disk 22-2 having the disk number #2.

A file including a plurality of image pieces 23 stored in an optical disk 22-p (p = 1 through 4) has a hierarchical structure of file names 24, division management information 25, and divided image data 26. In this embodiment, an identical file name (GAZOU) is used for the plurality of disks 22-1 through 22-4. Each division management information 25 includes an array position (i,j) of each image piece 23 on the large-frame image 21 and pointer information indicating a storage position in the optical disk 22-p. The divided image data 26 consists of each image piece 23 designated by the pointer information in the division management information 25. In the optical disk devices 12-1 through 12-4, optical disks are replaceable. Therefore, the four optical disks 22-1 through 22-4 storing the large-frame image 21 are handled as a set. In this embodiment, the optical disk devices to which the optical disks 22-1 through 22-4 are loaded are not fixed. For this reason, the pointer information includes information indicating the storage position in the corresponding optical disk (optical disk block number) and an optical disk number indicating the disk.

An operation of the embodiment of the present invention will now be described.

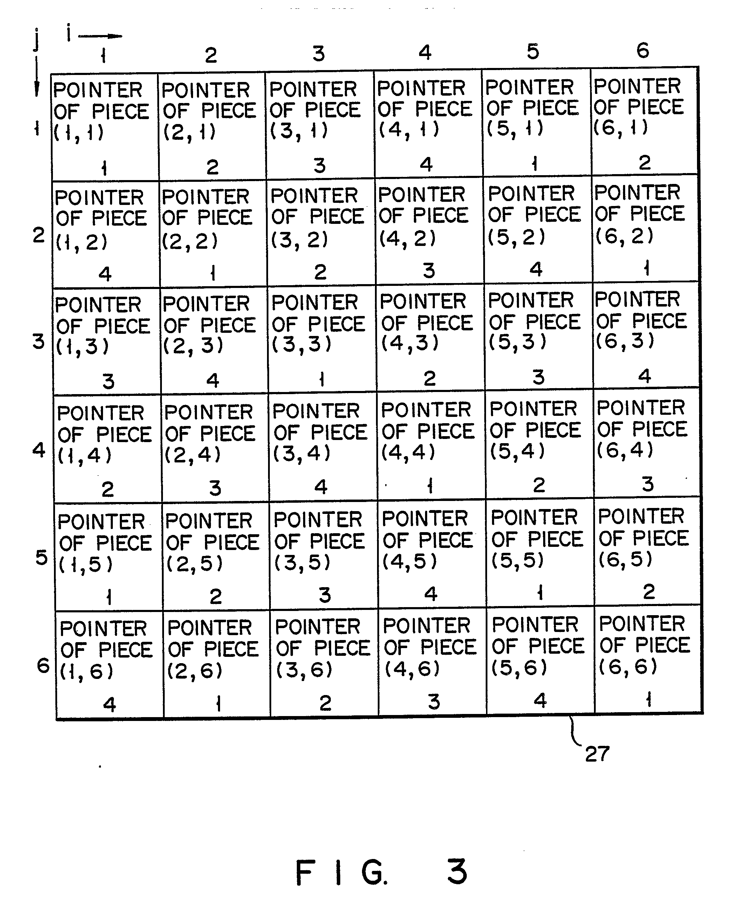

Assume that of the optical disks 22-1 through 22-4 divisionally storing the large-frame image 21, the optical disk 22-1 is set in the optical disk device 12-1, the disk 22-2 is set in the disk device 12-2, the disk 22-3 is set in the disk device 12-3, and the disk 22-4 is set in the disk device 12-4, respectively. As long as the optical disks 22-1 through 22-4 are set in different disk devices, their set destinations can be arbitrarily determined. In this state, when the large-frame image 21 is read out from the optical disk devices 12-1 through 12-4, the CPU 11 opens a file having the file name 24 inherent to the large-frame image 21. In this case, the CPU 11 reads out the pointer information indicating the storage position of each image piece 23 stored in the file which is divisionally managed by the identical file name 24 (GAZOU) in the optical disks 22-1 through 22-4 set in the optical disk devices 12-1 through 12-4, respectively, in accordance with the division management information 25. The CPU 11 generates, in the main memory 15, a storage destination table 27 which indicates storage destinations of the image pieces constituting the large-frame image 21 divisionally stored in the optical disks 22-1 through 22-4 set in the optical disk devices 12-1 through 12-4 in correspondence with two-dimensional array positions (Fig. 2) of the pieces 23 in the large-frame image 21. Fig. 3 shows the storage destination information table generated in the main memory 15. In the storage destination information table 27 shown in Fig. 3, pointer information is formed in correspondence with the array order of the image pieces 23 on the large-frame image 21 shown in Fig. 2. However, as described above, the optical disk is detachably inserted in the optical disk device. Therefore, even if an arbitrary disk is set in an arbitrary device, a storage destination table can be generated from the disk management information stored in each disk.

Therefore, when the CPU 11 reads out a desired image portion of the large-frame image 21 (initially, 9 image pieces of 3 columns × 3 rows), it refers to some entries corresponding to the image portion in the storage destination information table. As a result, the CPU 11 can easily recognize the storage destinations of some image pieces 23 corresponding to the image portion. The image pieces 23 undergo read control of the desired image portion on the basis of the above recognition result. The read control will be described below.

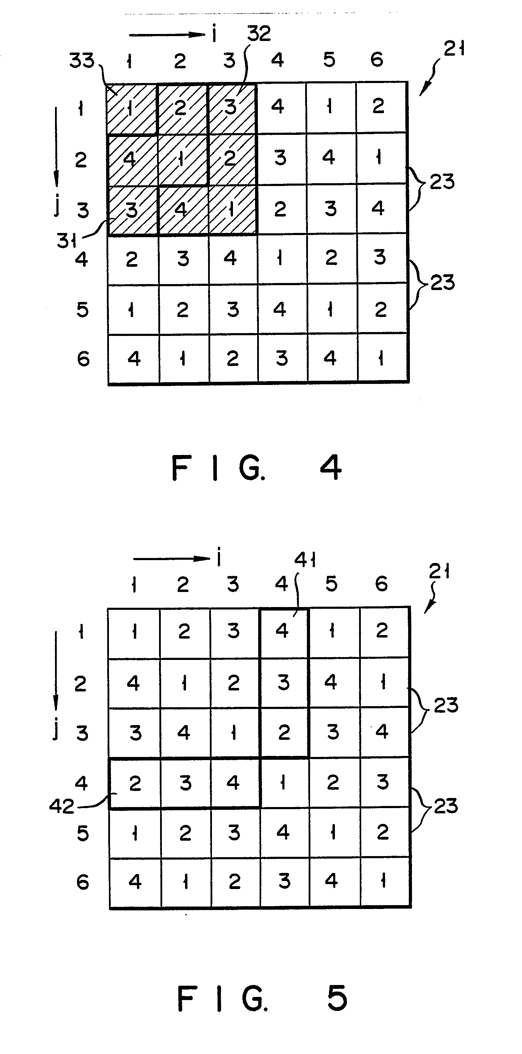

Assume that 3 × 3 (nine) image pieces 23 having an image piece 23 at a position (i = 1, j = 1) as an upper left corner piece are read out to the image memory 14, as indicated by hatching in Fig. 4. In this case, the CPU 11 obtains pointer information indicating the storage destination of each of the nine image pieces 23 from the corresponding entry of the storage destination information table generated when the file is opened. The CPU 11 executes read access of the nine image pieces 23 by issuing three read commands, as will be described below.

The CPU 11 selects, as first read objects, four image pieces 23 (image pieces 23 at i = 2, j = 2; i = 2, j = 1; i = 1, j = 3; and i = 1, j = 2) which include the central image piece 23 as indicated by reference numeral 31 in Fig. 4 and have different optical disk numbers as the storage destinations. The CPU 11 sends in turn parameters (optical disk numbers, optical disk track numbers, and the like) necessary for the read access to the optical disk IFs 13-1 through 13-4 of the corresponding optical disk devices 12-1 through 12-4 via the system bus 16. The CPU 11 issues a read command on the system bus 16. The read command has a device designation field (4 bits) for designating the optical disk devices 12-1 through 12-4 in units of bits. More specifically, a bit corresponding to the device to be operated of a port assigned to the main memory 15 is set to be "1". In this embodiment, all the bits of the device designation field are set to be "1".

If the bits corresponding to the optical disk devices 12-1 through 12-4 in the device designation field of the read command sent from the CPU 11 are "1", the optical disk IFs 13-1 through 13-4 read out image pieces from the positions of the optical disks 22-1 through 22-4 set in the optical disk devices 12-1 through 12-4, which are designated by the received parameters (optical disk numbers, optical disk track numbers, and the like). In this case, all the optical disk devices 12-1 through 12-4 serve as read objects, and four image pieces 23 are parallelly read out therefrom. The image pieces 23 read out from the optical disk devices 12-1 through 12-4 are transferred to and stored in the image memory 14 through the DMA transfer paths 15 under the control of the optical disk IFs 13-1 through 13-4.

The CPU 11 selects, as second read objects, another four image pieces 23 having different optical disk numbers as the storage destinations indicated by reference numeral 32 in Fig. 4 (image pieces at i = 3, j = 3; i = 3, j = 2; i = 3, j = 1; and i = 2, j = 3), and sends parameters (storage destination information) necessary for the read access to the optical disk IFs 13-1 through 13-4 of the corresponding optical disk devices 12-1 through 12-4 in turn. The CPU 11 issues a read command in which all the bits of the device designation field are "1" onto the system bus 16. Thus, image pieces are parallelly read out from the positions on the optical disks 22-1 through 22-4 set in the optical disk devices 12-1 through 12-4 designated by the received parameters, and are stored in the image memory 14.

Finally, the CPU 11 selects one image piece 23 (an image piece 23 at i = 1, j = 1) indicated by reference numeral 33 in Fig. 4 of the 3 × 3 image pieces 23 as the third (final) read object, and sends a parameter (storage destination information) necessary for the read access to the optical disk device 12-1 in which the corresponding optical disk 22-1 is set. Thereafter, the CPU 11 issues a read command for designating the read operation of only the optical disk device 12-1. An image piece is thus read out from the position on the optical disk 22-1 set in the optical disk device 12-1 designated by the received parameter, and is stored in the image memory 14.

As described above, according to this embodiment, the nine image pieces 23 can be read out at high speed using three read commands. In this embodiment, read control may be performed in units of three image pieces 23 in an identical row or column.

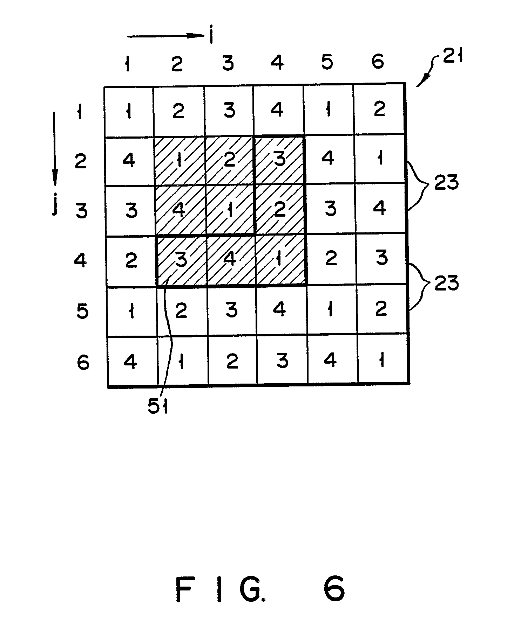

When the nine image pieces 23 are stored in the image memory 14, an image of 1,024 × 1,280 dots including the central image piece 23 is displayed on the screen of the display unit 28. In this case, since one image piece consists of 1,024 × 1,024 dots, 1,024 × 28 (bits) of the two adjacent image pieces are displayed as a margin. In this state, when a frame is scrolled in an i or j increase direction and reaches a predetermined position on the image memory 14, the CPU 11 selects, as read objects, three image pieces 23 (image pieces 23 at i = 4, j = 3; i = 4, j = 2; and i = 4, j = 1) having different optical disk numbers as storage destinations as indicated by reference numeral 41 in Fig. 5 or three image pieces 23 (image pieces 23 at i = 1, j = 4; i = 2, j = 4; and i = 3, j = 4) having different optical disk numbers as storage destinations as indicated by reference numeral 42, and sends parameters (storage destination information) necessary for the read access to the optical disk IFs 13-2 through 13-4 of the corresponding optical disk devices 12-2 through 12-4 in turn. The CPU 11 then issues a read command for designating the read operation of the optical disk devices 12-2 through 12-4. The image pieces are read out from the positions on the optical disks 22-2 through 22-4 set in the optical disk devices 12-2 through 12-4 designated by the received parameters, and are stored in the image memory 14.

In this manner, according to the present invention, three image pieces 23 upon frame scrolling in the i or j direction can be read out at high speed using one read command. In a system capable of obliquely scrolling a frame, six image pieces 23 must be read out, as indicated by reference numeral 51 in Fig. 6. In this case, the number of image pieces 23 stored in an identical optical disk is at most two. More specifically, in Fig. 6, when the optical disks #3, #2, and #1 are accessed in correspondence with image pieces (4,2) (4,3), and (4,4), and the optical disks #3 and #4 are accessed in correspondence with image pieces (2,4) and (3,4), two image pieces are read out from an identical disk #3. Therefore, these image pieces can be read out using two read commands.

The present invention is not limited to the above embodiment. For example, the number of optical disks is not limited to four but may be arbitrarily determined as long as a plurality of disk devices are arranged. In the above embodiment, optical disk devices are used. However, other external storage devices e.g., magnetic disk devices may be used.

Reference signs in the claims are intended for better understanding and shall not limit the scope.

## Claims

1. A two-dimensional file management system for a large-frame image, characterized by comprising:

a plurality of disk devices (22-1, 22-2, 22-3, 22-4) which divisionally store unit images each having a predetermined size obtained by dividing a two-dimensional large-frame image in a matrix using an identical file name and can be parallelly accessed;

storage destination information table generating means (11) for generating a storage destination information table (27) indicating storage destinations of the unit images constituting the large-frame image divisionally stored in said plurality of disk devices in correspondence with two-dimensional array positions of the unit images in the large-frame image; and

disk access control means (11, 13-1, 13-2, 13-3, 13-4) for designating an access destination in units of said disk devices with reference to said storage destination information table generated by said storage destination information table generating means, simultaneously supplying an access request to said disk devices which are designated as the access destinations, and parallelly reading out the unit images.

2. A system according to claim 1, characterized in that the unit images of the large-frame image are cyclically stored in said plurality of disk devices in an array order thereof within each identical row or column, and every time a row or column is switched, a storage destination is cyclically switched by one disk device in a given direction.

3. A system according to claim 2, characterized in that each of said disk devices stores division management information including pointer information indicating a storage position of each unit image stored in the disk device and array information indicating an array position in the large-frame image, and said storage destination information table generating means generates the storage destination information table in accordance with the division management information stored in each of said disk devices when a file of the large-frame image is opened.

F I G. 1

i

|  | 1 | 2 | 3 | 4 | 5 | 6 |
|---|---|---|---|---|---|---|
| 1 | 1 | 2 | 3 | 4 | 1 | 2 |
| 2 | 4 | 1 | 2 | 3 | 4 | 1 |
| 3 | 3 | 4 | 1 | 2 | 3 | 4 |
| 4 | 2 | 3 | 4 | 1 | 2 | 3 |
| 5 | 1 | 2 | 3 | 4 | 1 | 2 |
| 6 | 4 | 1 | 2 | 3 | 4 | 1 |

j

21

23

23

OPTICAL DISK (#1)  OPTICAL DISK (#2)  OPTICAL DISK (#3)  OPTICAL DISK (#4)

22-1        22-2        22-3        22-4

| GAZOU | GAZOU | GAZOU | GAZOU 24 |
|---|---|---|---|
| (1,1) | (2,1) | (3,1) | (4,1) |
| (5,1) | (6,1) | (4,2) | (1,2) |
| (2,2) | (3,2) | (1,3) | (5,2) |
| (6,2) | (4,3) | (5,3) | (2,3) |
| (3,3) | (1,4) | (2,4) | (6,3) |
| (4,4) | (5,4) | (6,4) | (3,4) |
| (1,5) | (2,5) | (3,5) | (4,5) |
| (5,5) | (6,5) | (4,6) | (1,6) |
| (2,6) | (3,6) |  | (5,6) |
| (6,6) |  |  |  |

25

| 10 IMAGE PIECES | 9 IMAGE PIECES | 8 IMAGE PIECES | 9 IMAGE PIECES |
|---|---|---|---|

26

F I G.   2

j | i →

|   | 1 | 2 | 3 | 4 | 5 | 6 |
|---|---|---|---|---|---|---|
| 1 | POINTER OF PIECE (1,1) | POINTER OF PIECE (2,1) | POINTER OF PIECE (3,1) | POINTER OF PIECE (4,1) | POINTER OF PIECE (5,1) | POINTER OF PIECE (6,1) |
|   | 1 | 2 | 3 | 4 | 1 | 2 |
| 2 | POINTER OF PIECE (1,2) | POINTER OF PIECE (2,2) | POINTER OF PIECE (3,2) | POINTER OF PIECE (4,2) | POINTER OF PIECE (5,2) | POINTER OF PIECE (6,2) |
|   | 4 | 1 | 2 | 3 | 4 | 1 |
| 3 | POINTER OF PIECE (1,3) | POINTER OF PIECE (2,3) | POINTER OF PIECE (3,3) | POINTER OF PIECE (4,3) | POINTER OF PIECE (5,3) | POINTER OF PIECE (6,3) |
|   | 3 | 4 | 1 | 2 | 3 | 4 |
| 4 | POINTER OF PIECE (1,4) | POINTER OF PIECE (2,4) | POINTER OF PIECE (3,4) | POINTER OF PIECE (4,4) | POINTER OF PIECE (5,4) | POINTER OF PIECE (6,4) |
|   | 2 | 3 | 4 | 1 | 2 | 3 |
| 5 | POINTER OF PIECE (1,5) | POINTER OF PIECE (2,5) | POINTER OF PIECE (3,5) | POINTER OF PIECE (4,5) | POINTER OF PIECE (5,5) | POINTER OF PIECE (6,5) |
|   | 1 | 2 | 3 | 4 | 1 | 2 |
| 6 | POINTER OF PIECE (1,6) | POINTER OF PIECE (2,6) | POINTER OF PIECE (3,6) | POINTER OF PIECE (4,6) | POINTER OF PIECE (5,6) | POINTER OF PIECE (6,6) |
|   | 4 | 1 | 2 | 3 | 4 | 1 |

27

# F I G.  3

F I G. 4

F I G. 5

F I G. 6